# EUROPEAN PATENT SPECIFICATION

(11) **EP 2 337 813 B1**
(45) Date of publication and mention of the grant of the patent: **24.04.2013**
(21) Application number: 09793089.5
(22) Date of filing: 29.09.2009
(51) Int. Cl.: C08K 5/00, C08K 3/22, C09D 5/00, C09D 5/32, C09D 7/12

(54) **POLYMER-BASED PRODUCTS HAVING IMPROVED SOLAR REFLECTIVITY AND UV PROTECTION**
PRODUKTE AUF POLYMERBASIS MIT VERBESSERTER SOLARREFLEKTIVITÄT UND VERBESSERTEM UV-SCHUTZ
PRODUITS À BASE DE POLYMÈRE PRÉSENTANT UNE RÉFLECTIVITÉ SOLAIRE ET UNE PROTECTION CONTRE LES UV AMÉLIORÉES

(30) Priority: 29.09.2008 US 100965 P; 20.02.2009 US 154018 P
(43) Date of publication of application: 29.06.2011
(73) Proprietor: E. I. du Pont de Nemours and Company, Wilmington, DE 19898 (US)
(72) Inventor: BLOOM, Joy Sawyer, Wilmington Delaware 19810 (US); CONNOLLY JR, John, D., Wilmington Delaware 19809 (US)
(74) Representative: Towler, Philip Dean
(86) International application number: PCT/US2009/058684
(87) International publication number: WO 2010/037071

(56) References cited:
- WO-A1-96/38287
- WO-A1-2009/136141
- US-A- 5 478 878
- US-A1- 2002 129 739
- US-A1- 2005 039 636
- US-A1- 2006 204 456
- DATABASE WPI Week 20068 Thomson Scientific, London, GB; AN 2006-073555 XP002562823 -& JP 2006 008874 A (HOUSETECH KK) 12 January 2006 (2006-01-12)
- DuPont: "DuPont Light Stabilizer 210 Datasheet" www2.dupont.com 2007, XP002562883 Retrieved from the Internet: URL:http://www2.dupont.com/Titanium_Techno logies/en_US/products/dls_210/DLS_data_she et.pdf> [retrieved on 2010-01-13]
- BERDAHL ET AL: "Weathering of roofing materials - An overview" CONSTRUCTION AND BUILDING MATERIALS, ELSEVIER, vol. 22, no. 4, 1 February 2008 (2008-02-01), pages 423-433, XP022450140 ISSN: 0950-0618

## Description

### BACKGROUND OF THE DISCLOSURE

### Field of the Disclosure

The present disclosure relates to polymer-based products containing inorganic powders, in the ultrafine particle size range, in combination with colorants such as color pigments, and more particularly to polymer-based products having improved solar reflectivity and UV protection.

### Description of the Related Art

Polymer-based products are made from polymers such as thermoplastic and thermosetting polymers by known techniques such as injection molding, profile extrusion, rotomolding, thermoforming, casting, melt extrusion and extrusion coating. In a specific embodiment, high molecular weight thermoplastic polymers, for example, hydrocarbon polymers and polyamides, are melt extruded into shaped structures such as tubing, pipe, wire coating or film, for example, cool roof coverings, by well-known procedures wherein a rotating screw pushes a viscous polymer melt through an extruder barrel into a die in which the polymer is shaped to the desired form, and is then subsequently cooled and solidified into a product, that is, the extrudate, having the general shape of the die.

Inorganic powders may be added to the polymers. In particular, titanium dioxide pigments, have been added to polymers for imparting whiteness and/or opacity to the finished article.

In warm climates a substantial amount of energy is expended in keeping the interior of buildings cool. One way to reduce the amount of energy expended is to employ energy saving coatings and/or cool roof coverings on buildings. Typically, these materials help reduce heat gain when the weather is hot and reduce heat loss when the weather is cold,

A need exists for polymer-based products, such as cool roof coverings, having improved solar reflectivity and UV protection.

### SUMMARY OF THE DISCLOSURE

In a first aspect, the disclosure provides a polymer-based product for applications exposed to light having improved solar reflectivity and UV protection comprising:
(a) a polymer;
(b) a colorant; and
(c) an ultrafine TiO₂ having a median primary particle size (MPPS) of 70 nm to 135 nm and still more typically 90 nm to 120 nm

By median primary particle size we mean average particle size of a minimum of 500 particles as observed by high resolution scanning electron microscopy.

In the first aspect, the polymer may be thermoplastic or thermosetting. Typically the polymer is selected from the group consisting of polyolefin; polyvinyl chloride; acrylonitrile/butadiene/styrene (ABS), acrylonitrile/styrene/acrylate (ASA); polyamide; polyester; polycarbonate; polyurethane; epoxy; phenolic; and mixture thereof.

In the first aspect, the polymer-based product is a shaped article.

In the first aspect, the shaped article is selected from the group consisting essentially of tubing, pipe, wire coating, film such as roofing materials, agricultural film, and shrink wrap protective film, siding, window profiles, stadium seating, decking, railing, building material, awnings, tent, geothermal membrane, and a toy.

In a second aspect, the invention provides a roof cover comprising a polymer-based product wherein the polymer-based product has improved solar reflectivity and UV protection and comprises:
(a) a polymer;
(b) a colorant; and
(c) an ultrafine TiO₂ having a median primary particle size (MPPS) of greater than about 70 nm.

### DETAILED DESCRIPTION OF THE DISCLOSURE

Polymer-based products such as plastic parts prepared from colorant and the ultrafine TiO₂ containing polymer compositions have minimized light transmission in the UV portion of the spectra and show improvement regarding total solar reflectivity.

### Polymer:

The polymer may be thermoplastic or thermosetting. In one embodiment the thermoplastic polymer may be a melt-processable polymer which may be employed together with the colorant and the ultrafine TiO₂ having a median primary particle size (MPPS) of greater than about 70 nm of this disclosure. Typically the polymer is a high molecular weight polymer and is thermoplastic. "High molecular weight" is meant to describe polymers having a melt index value of about 0.01 to about 50, typically from about 2 to about 10 as measured by ASTM method D1238-98. By "melt-processable," it is meant a polymer that can be extruded or otherwise converted into shaped articles through a stage that involves obtaining the polymer in a molten state.

In another embodiment, the polymer is thermosetting. Thermosetting resins are those which change irreversibly due to heat or or catalyst from a fusible and or soluble material into one which is infusible and insoluble through the formation of a covalently cross linked, thermally stable network. Typical thermosetting resins include epoxy, phenolic, amino , unsaturated polyester and urethanes. (reference Textbook of Polymer Science, F.W. Billmeyer, Jr, Wiley-Interscience, New York, (1962)

Polymers which are suitable for use in this disclosure include, by way of example but not limited thereto, polymers of ethylenically unsaturated monomers including olefins such as polyethylene, polypropylene, polybutylene, and copolymers of ethylene with higher olefins such as alpha olefins containing 4 to 10 carbon atoms or vinyl acetate; vinyls such as polyvinyl chloride, polyvinyl esters such as polyvinyl acetate, polystyrene, acrylic homopolymers and copolymers; phenolics; alkyds; amino resins; epoxy resins, polyamides, polyurethanes; phenoxy resins, polysulfones; polycarbonates; polyesters and chlorinated polyesters; polyketones; polyethers; acetal resins; polyimides; and polyoxyethylenes. A more complete list of suitable resins includes acrylonitrile-butadiene-styrene resin, ethylene-propylene rubber, natural rubber, nylon-6, nylon-11, nylon-6,6, nylon-6,9, nylon-6,10, nylon-6,12, polyacetal, polyacrylonitrile, poly(benzyl methacrylate), poly(butyl acrylate), poly(butylene terephthalate), poly(butyl methacrylate), polycarbonate, poly(cyclohexanedimethylene terephthalate), poly(cyclohexyl methacrylate), polyetheretherketone, polyetherketoneketone, polyetherimide, polyethersulfone, poly(ethyl acrylate), polyolefin, poly(ethylene isophthalate), poly(ethylene phthalate), poly(ethylene terephthalate), poly(ethylene 2,6-naphthalenedicarboxylate), poly(ethyl methacrylate), poly(hexyl methacrylate), polyisobutylene, poly(isobutyl methacrylate), poly(isopropyl acrylate), poly(isopropyl methacrylate), poly(methyl acrylate), poly(methyl methacrylate), polymethylpentene, polyoxymethylene, poly(phenylene oxide), poly(phenylene sulfide), poly(phenyl methacrylate), polypropylene, poly(propyl methacrylate), polystyrene, polysulfone, polytetrafluoroethylene, poly(vinylidene fluoride), polyvinylfluoride, poly(vinyl alcohol), poly(vinyl chloride), styrene-acrylonitrile resin, styrenemaleic anhydride copolymer, and acrylonitrile/styrene/acrylate. Mixtures of polymers are also contemplated.

Polymers suitable for use in the present disclosure also include various rubbers and/or elastomers, either natural or synthetic polymers based on copolymerization, grafting, or physical blending of various diene monomers with the above-mentioned polymers, all as generally known in the art.

Typically, the polymer may be selected from the group consisting of polyolefin; polyvinyl chloride; acrylonitrile containing polymer, such as acrylonitrile/butadiene/styrene (ABS), and acrylonitrile/styrene/acrylate (ASA); polyamide; polyester; polycarbonate, polyurethane; epoxy; phenolic; and mixture thereof. More typically used polymers are polyolefins. Most typically used polymers are ASA, ABS and polyolefins selected from the group consisting of polyethylene, polypropylene, and mixture thereof. A typical polyethylene polymer is low density polyethylene and linear low density polyethylene.

The polymer is present in the amount of about 40% to about 99.8% by weight, based on the total weight of solids.

### Colorant:

Any conventional colorant such as a pigment, dye or a dispersed dye may be used in this disclosure to impart color to the polymer-based product. In one embodiment, generally, about 0.1 % to about 20% by weight of conventional pigments, based on the total weight of the component solids, can be added. More typically, about 0.1% to about 20%. by weight of conventional pigments, based on the total weight of component solids, can be added. Most typically, about 0.1% to about 5% by weight of conventional pigments, based on the total weight of component solids, can be added. Conventional compounding techniques such as Banbury, twin screw, or continuous mixer may be used to disperse the pigments to form a compound or concentrate. The compound or concentrate may then be blended with additional constituents of the polymer-based product in order to form the final product.

The pigment component of this disclosure may be any of the generally well-known pigments or mixtures thereof used in polymer-based products. Some suitable examples may be found in Pigment Handbook, T. C. Patton, Ed., Wiley-Interscience, New York, 1973. Any of the commercial pigments used in polymer-based products can be utilized in these compositions such as the following: metallic oxides, such as titanium dioxide, zinc oxide, aluminum oxide, and iron oxide, metal hydroxide, metal flakes, such as aluminum flake, chromates, such as lead chromate, sulfides, sulfates, carbonates, carbon black, silica, talc, china clay, phthalocyanine blues and greens, organo reds, organo maroons, pearlescent pigments and other organic pigments and dyes. If desired chromate-free pigments, such as barium metaborate, zinc phosphate, aluminum triphosphate and mixtures thereof, can also be used.

Some useful pigments include C.I. Pigments: Black 12, Black 26, Black 28, Black 30, Blue 15.0, Blue 15.3 (G), Blue 15.3 (R), Blue 28, Blue 36, Blue 385, Brown 24, Brown 29, Brown 33, Brown 10P850, Green 7 (Y), Green 7 (B), Green 17, Green 26, Green 50, Violet 14, Violet 16, Yellow 1, Yellow 3, Yellow 12, Yellow 13, Yellow 14, Yellow 17, Yellow 62, Yellow 74, Yellow 83, Yellow 164, Yellow 53, Red 2, Red 3(Y), Red 3 (B), Red 4, Red 48.1, Red 48.2, Red 48.3, Red 48.4, Red 52.2, Red 49.1, Red 53.1, Red 57.1 (Y), Red 57.1 (B), Red 112, Red 146, Red 170(F5RK Type) Bluer, C.I. Pigment Orange 5, Pigment Orange 13, Pigment Orange 34, Pigment Orange 23 (R), and Pigment Orange 23 (B). Some useful organic pigments include: Pigment Yellow 151, Pigment Yellow 154, Pigment Yellow 155, Pigment Red 8, Pigment Red 8, Pigment Red 49.2, Pigment Red 81, Pigment Red 169, Pigment Blue 1, Pigment Violet 1, Pigment Violet 3, Pigment Violet 27, Pigment Red 122, Pigment Violet 19. Some useful inorganic pigments include: Middle Chrome, Lemon Chrome, Prime-Rose Chrome, Scarlet Chrome, and Zinc Chromate.

More typical pigments include: Black 12, Black 26, Black 28, Black 30, Blue 28, Blue 36, Blue 385, Brown 24, Brown 29, Brown 33, Green 17, Green 26, Green 50, Violet 14, Violet 16, Yellow 164 and Yellow 53.

Typical cool roof pigments include: C.I. Pigment Blue 385, C.I. Pigment Brown 10P850, C.I Pigment Black 10P922 and may also include a new generation of pigments typically described as "cool" or IR reflective pigments such IR reflective pigments sold by Ferro Corporation that include "new black" (Ferro product no. IV-799), "old black" (Ferro product no. V-797), "turquoise" (Ferro product no. PC-5686), "blue" (Ferro product no. PC-9250), "camouflage green" (Ferro product no. V-12650), "IR green" (Ferro product no. V-12650), "autumn gold" (Ferro product no. PC9158), "yellow" (Ferro product no PC-9416) and "red" (Ferro product nos. V-13810 and V-13815).

These types of pigments may also be obtained from Shepherd Color, Cincinnati, OH; Ciba Specialty Color, Tarrytown, NY and MetroChem Corporation, Umraya, India.

### Ultrafine TiO₂:

In particular, titanium dioxide is an especially useful powder in the processes and products of this disclosure. Titanium dioxide (TiO₂) powder useful in the present disclosure may be in the rutile or anatase crystalline form. It is commonly made by either a chloride process or a sulfate process. In the chloride process, titanium tetratchloride (TiCl₄) is oxidized to TiO₂ powders. In the sulfate process, sulfuric acid and ore containing titanium are dissolved, and the resulting solution goes through a series of steps to yield TiO₂. Both the sulfate and chloride processes are described in greater detail in "The Pigment Handbook", Vol. 1, 2nd Ed., John Wiley & Sons, NY (1988), the teachings of which are incorporated herein by reference. The powder may be pigmentary, nano or ultrafine particles. Pigmentary refers to median primary particles in the size range typically about 200 nm to about 450 nm, and nano refers to median primary particles in the size range typically less than 50 nm.

By "ultrafine particle" it is meant that the titanium dioxide powders typically have a median primary particle size (MPPS) of 70 nm to 135 nm and more typically about 90 nm to about 120 nm, as determined by utilizing high resolution scanning electron micrographs (HRSEM). By median primary particle size we mean average particle size of a minimum of 500 particles as observed by HRSEM. The ultrafine particles of this disclosure typically are substantially polyhedral in shape and have an aspect ratio between about 1 and about 3 and more typically about 1 to about 2. The process for manufacturing the ultrafine particles of this disclosure is outlined in detail in US Patents 7,276,231 issued October 2, 2007, and 7, 208,126 issued April 24, 2007.

As shown in the table below the ultrafine TiO₂ of this disclosure, DuPont™ Light Stabilizer 210 (DLS 210) has a median primary particle size that is approximately 2x that of known nano-sized titanium dioxide powders, UV Titan P190 and L530 obtained from Kemira, and Hombitec RM-130F obtained from Sachtleben,

| **Titanium Dioxide** | | **Median primary particle Size (nm)*** |
|---|---|---|
| | | |
| DLS 210 | | >70 |
| P190 | | 36 |
| L530 | | 38 |
| RM130F | | 40 |

| | | |
|---|---|---|
| * determined by utilizing high resolution scanning electron micrographs (HRSEM). The median primary particle size is defined as the average value of all the particles measured. | | |

Opacity is another distinguishing feature between pigmentary and ultrafine and nano-sized particles. Opacity in polymeric products is a function of bending the optical path of white light such that its path is reversed and returns to the eye of the viewer. The alteration of optical path is accomplished by maximizing the difference of the index of refraction of fillers and the index of refraction of the matrix polymer they are dispersed in. TiO₂ is the highest refractive index of known fillers and hence provides the maximum difference in refractive index when combined with any polymer. The interaction of light with fillers is very strongly influenced by the particle size of the filler, and is maximized when the filler particle is sized to be 1/2 the wavelength of the incoming light radiation. For visible white light, this size range is about 200 nm to about 400 nm. Particles smaller than about 200 nm decreasingly interact with visible light. These particles interact more strongly with ultraviolet light. Particles less than about 50 nm (nano) are too small to interact with visible light components and will supply no contribution to opacity. Particles in the size range of about 70 nm to about 200 nm (ultrafine) will have an increased chance of refracting some visible components of light and hence will have a contribution to opacity, based on the closer the median particle size becomes to the 200 nm lower limit of pigmentary particles.

The titanium dioxide powder may be substantially pure titanium dioxide or may contain other metal oxides, such as silica, alumina, zirconia. Other metal oxides may become incorporated into the powders, for example, by co-oxidizing or co-precipitating titanium compounds with other metal compounds. If co-oxidized or co-precipitated, the treatment is about 20 wt% of the metal oxide, more typically, 0.5 to 10 wt%, most typically about 0.5 to about 5 wt% may be present, based on the total powder weight.

The titanium dioxide powder may also bear one or more metal oxide surface treatments. These treatments may be applied using techniques known by those skilled in the art. Examples of metal oxide treatments include silica, alumina, zirconia among others. Such treatments may be present in an amount of about 0.1 to about 10 wt%, based on the total weight of the powder.

The inorganic powder may be silanized by treating with at least one silane, or a mixture of at least one silane and at least one polysiloxane. The silane comprises a silane monomer. Suitable silane monomers are those in which at least one substituent group of the silane is contains an organic substituent. The organic substituent can contain heteroatoms such oxygen or halogen. Typical examples of suitable silanes include, without limit, alkoxy silanes and halosilanes having the general formula:

RₓSi(R')₄₋ₓ

wherein
R is a nonhydrolyzable aliphatic, cycloaliphatic or aromatic group
having at least 1 to about 20 carbon atoms;
R' is a hydrolyzable group such as an alkoxy, halogen, acetoxy or hydroxy or mixtures thereof; and
x = 1 to 3.

Typically R is a nonhydrolyzable aliphatic group of the structure: 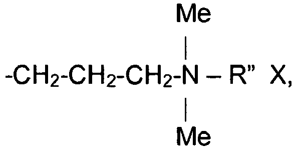 wherein R" is a C1-C20 hydrocarbon, and X = Cl, Br, or HSO₄; and R' is a hydrolyzable group such as an alkoxy, halogen, acetoxy or hydroxy or mixtures thereof; and x = 1 to 3.

Some useful silanes may be selected from the group of 3-trimethoxysilyl propyl octyl dimethyl ammonium chloride, 3-trimethoxysilyl propyl octyl dimethyl ammonium chloride, 3-trimethoxysilyl propyl decyl dimethyl ammonium chloride, 3-trimethoxysilyl propyl hexadecyl dimethyl ammonium chloride, and 3-trimethoxysilyl propyl octadecyl dimethyl ammonium chloride.

Alternately, a siloxane may be used in combination with the silane to surface treat the inorganic powder. Typically, the siloxane may have a reactive site, and a silicon-hydrogen bond may form the reactive site of the siloxane polymer. Hydridosiloxanes are typical examples of useful siloxanes having a silicon-hydrogen reactive site. Such hydridosiloxanes include alkylhydridosiloxanes in which the alkyl group contains from 1 to about 20 carbon atoms. Specifically methylhydridosiloxanes can be useful such as those having the formula Me₃SiO[SiOMeH]ₙ-[SiOMe₂]ₘ-SiMe₃, where n and m are independently integers from 1 to about 200 and Me is methyl. Other potentially useful siloxane compounds having a reactive site are the hydridosilsesquioxanes described in U.S. Patent No. 6,572,974.

The silane or combination of silane and siloxane may be present in the amount of about 0.1 to about 5 weight %, based on the total amount of the treated powder.

Alternately, the inorganic powder may be surface treated with hydrocarbon based surface treatments such as fatty acids, trimethylol propane (TMP), triethanol amine (TEA), etc. Additionally the inorganic powder may be surface treated with organo-phosphonates, organo-phosphoric acid compounds, organo-acid phosphates, organo-phosphinates, organo-sulfonic compounds.

By "surface treated" it is meant inorganic powders, in particular titanium dioxide powders, that have been contacted with the compounds described herein wherein the compounds are adsorbed on the surface of the powder or a reaction product of at least one of the compounds with the powder is present on the surface as an adsorbed species or chemically bonded to the surface. The compounds or their reaction products or combination thereof may be present as a coating, continuous or discontinuous, on the surface of the powder. Typically, a continuous coating comprising the silane, siloxane, fatty acid, hydrocarbons, organo-phosphonates, organo-phosphoric acid compounds, organo-acid phosphates, organo-phosphinates, organo-sulfonic compounds.or mixtures thereof, is on the surface of the powder.

The silanized inorganic powders may be prepared by a process that comprises surface treating powders with the silane or combination of silane and siloxane. This process is not especially critical and may be accomplished in a number of ways. While typically the powder may be treated with the silane, if present, and then the siloxane compound in sequence, the powder may be treated with the silane and the siloxane compound simultaneously.

The surface treatment of the powder may be performed by contacting dry powder with neat compound or in an appropriate solvent that one skilled in the art can select. When a silane is employed the compound may be prehydrolyzed, then contacted with dry powder. Alternatively other methods may be used for treating particle surfaces such as v-cone, flow restrictor etc.

The ultrafine TiO₂ is present in the amount of about 0.1 % to about 20% by weight, more typically about 0.5% to about 3% by weight based on the weight of solids.

### Other Additives

A wide variety of additives may be present in the polymer composition produced by the process of this disclosure as necessary, desirable or conventional. Such additives include polymer processing aids such as fluoropolymers, fluoroelastomers, etc., catalysts, initiators, antioxidants (e.g., hindered phenol such as butylated hydroxytoluene), blowing agent, ultraviolet light stabilizers (e.g., hindered amine light stabilizers or "HALS"), organic pigments including tinctorial pigments, plasticizers, antiblocking agents (e.g. clay, talc, calcium carbonate, silica, silicone oil, and the like) leveling agents, viscosity modifiers, chain extenders, flame retardants, anti-cratering additives, and the like. The additives may be present in the amount of about 0% to about 20 weight % based on the total weight of solids

### Preparation of the Polymer-based product

The present disclosure provides a process for preparing a polymer-based product from a powder-containing polymer composition. Typically, in this process, the inorganic powder, such as ultrafine-sized titanium dioxide, which may be surface treated, and an additional colorant are mixed with the polymer. This step can be performed by any means known to those skilled in the art.

In one embodiment of the disclosure, the ultrafine-sized titanium dioxide and colorant may be contacted with a melt processable polymer. Any melt compounding techniques, known to those skilled in the art may be used. Any means of combining or blending the ingredients known to those skilled in the art may be used. Processing temperatures depend on the polymer and the blending method used, and these are well known to those skilled in the art. The intensity of mixing depends on the polymer characteristics.

The ultrafine-sized titanium dioxide and colorant containing polymer composition of this disclosure is useful in production of shaped articles. The amount of ultrafine-sized titanium dioxide and colorant present in this polymer composition and shaped polymer-based product will vary depending on the end use application. However, typically, the amount of ultrafine-sized titanium dioxide and colorant in the polymer composition ranges from about 0. 2 wt% to about 40 wt % based on the total weight of the composition, typically, about 0.5 to about 5.0 wt%. The amount of ultrafine-sized titanium dioxide and colorant in an end use, such as a shaped article or plastic part, for example, a polymer film, can range from about 0.1 to about 20 wt%, and is typically from about 0.1 to about 15 wt%, more typically about 2 to about 10 wt%.

In one embodiment, a polymer-based product or shaped article such as a plastic part is typically produced by melt blending the ultrafine-sized titanium dioxide and colorant containing polymer that comprises a first melt-processable polymer, with a second melt-processable polymer to produce the polymer that can be used to form the finished article of manufacture. The ultrafine-sized titanium dioxide and colorant containing polymer composition and a second polymer may be melt blended, using any means known in the art, as disclosed hereinabove. In this process, twin-screw extruders are commonly used. Co-rotating twin-screw extruders are available from Coperion. The melt blended polymer is extruded to form a shaped article.

This disclosure is particularly suitable for producing shaped articles such as tubing, pipes, wire coatings, films such as roofing materials, agricultural films, and shrink wrap protective films, siding, window profiles, stadium seating, decking, railing, building materials, awnings, tents, geothermal membranes, toys etc.

The examples which follow, description of illustrative and typical embodiments of the present disclosure are not intended to limit the scope of the disclosure. Various modifications, alternative constructions and equivalents may be employed without departing from the true spirit and scope of the appended claims. In one embodiment, the polymer-based product may be substantially free of pigmentary titanium dioxide.

### EXAMPLES

### Example 1:

The median primary particle size for titanium dioxide (TiO₂) was determined by utilizing high resolution scanning electron micrographs (HRSEM). The primary particle size is defined as the average value of all the particles measured. Table 1 documents the samples evaluated which were an ultrafine TiO₂, DuPont^{™} Light Stablizer 210 (DLS 210) obtained from DuPont, two nano TiO₂; UV Titan P190 and L530 obtained from Kemira, Hombitec RM-130F obtained from Sachtleben and a pigmentary TiO₂, TiPure® R-101 obtained from DuPont. The specimens used in HRSEM were created by placing 20ug of TiO₂ into a vial, adding 20ml of ethanol, sonicating for approximately 20 minutes, then a pipette was used to place a 20ul drop of the dispersion onto a carbon filmed copper grid. Each individual particle was measured using calipers and the scale incorporated on the individual micrograph. The number of particles counted for the analysis of particle size was calculated using a standardized sample size calculator with values of alpha risk, beta risk, and delta/sigma assigned to allow for 95% confidence that the means of the various ultrafine samples were truly different. Using this methodology a minimum of 500 particles per TiO₂ constituted the sampling size for all samples except for Sample 1 where 200 particles were utilized. The latter still met the sample size criteria of 95% confidence.

Table 1 documents the median primary particle size for the samples evaluated. There is a significant difference between Sample 2 and Sample 1 with the latter being 2X larger. Similarly there is a significant size differential between Samples 3, 4 and 5 versus Sample 2 with the latter being 2.5X larger.

**Table 1: Comparison of Primary Particle Sizes**

| Sample | Titanium Dioxide | Median Primary Particle Size (nm) |
|---|---|---|
| 1 | R-101 | 198 |
| 2 | DLS 210 | 103 |
| 3 | P190 | 36 |
| 4 | L530 | 38 |
| 5 | RM130F | 40 |

### Example 2:

The measurement of UV attenuation (absorption and scattering) is a means of evaluating the effectiveness of UV stabilization. The higher the attenuation the more effective the stabilizer is in scattering and absorbing the light. Similarly the lower the transmission the more effective the stabilizer is at protecting the polymer. An ultrafine TiO₂ DuPont^{™} Light Stabilizer 210 (DLS 210) obtained from DuPont, two nano TiO₂ Hombitec RM-130F obtained from Sachtleben and UV Titan P190 obtained from Kemira and a pigmentary TiO₂ TiPure® R-105 obtained from DuPont were evaluated using this methodology and the results reported in Table 2. The method used to measure UV attenuation utilized a Varian Cary 5000 spectrophotometer with a diffuse reflectance accessory (model DRA-2500). The accessory uses a 150mm integrating sphere. The results of ASTM methods E424-71 and E903-82 were combined and the UV attenuation determined over the range of desired wavelengths.

The film samples were prepared by preparing a 32.5 weight percent (wt%) master batch of the desired TiO₂ in low density polyethylene (Petrothene® NA-206000 obtained from Equistar) using a Farrel BR1600 continuous mixer. The master batch was combined with polypropylene homopolymer (Profax® PDC1274 obtained from Lyondell Basell) at an effective TiO₂ loading of 1 wt% and extruded into 20 cm wide by 50 micron thick film using a 9-barrel, 30mm co-rotating twin screw extruder equipped with a vacuum port in barrel 8, a 25cm wide flex lip die set to a nominal 50 micron gap and a volumetric feeder in the rear. The barrels temperatures were zone 1; 195°C, Zones 2 to 5; 200°C and the die was 185 °C. The screw speed was 250 rpm and the vacuum port pulled 125cm of Mercury. Quenching was accomplished using a water heated quench roll set to 80°C. The rate was 3.6 m/min.

**Table 2**

| Sample | Titanium Dioxide | | Wavelength | | | |
|---|---|---|---|---|---|---|
| | | | 250 nm | 300 nm | 350 nm | 400 nm |
| 6 | DLS 210 | Attenuation | 1.020 | 1.173 | 1.384 | 0.277 |
| | | % transmission | 10.0 | 6.9 | 4.1 | 52.8 |
| 7 | R-105 | Attenuation | 0.629 | 0.687 | 0.735 | 0.323 |
| | | % transmission | 23.5 | 20.5 | 18.4 | 47.5 |
| 8 | RM-130F | Attenuation | 2.099 | 2.374 | 0.582 | 0.099 |
| | | % transmission | 0.7 | 0.42 | 26.2 | 79.6 |
| 9 | P190 | Attenuation | 1.873 | 2.087 | 0.791 | 0.138 |
| | | % transmission | 1.34 | 0.82 | 16.2 | 72.9 |

The data indicates that the pigmentary TiO₂, Sample 7 is inferior to Samples 6, 7 and 8 when it comes to minimizing light transmission in the UV portion of the spectra. (transmission was calculated using the equation attenuation equal to the negative log of the transmission). There is also significant difference between Sample 6 and Samples 8 and 9 when it comes to the UVA (320-400nm) portion of the spectra with the latter two samples have 4 to 6x higher transmission.

### Example 3:

Polypropylene homopolymer (Profax® PDC1274 obtained from Lyondell Basell) was compounded with various combinations of red (Filofin ®Red BR-PP obtained from Ciba) and blue (Irgalite® Blue BSP obtained from Ciba) pigment along with DuPont^{™} Light Stabilizer 210 (DLS 210, obtained from DuPont) and a hindered amine light stabilizer (HALS)(Chimassorb® 119 obtained from Ciba) in proportions documented in Table 3. The compounding was accomplished using an 18mm co-rotating twin screw extruder equipped with a 3.2mm 1-hole die and a gravimetric feeder in the rear. The barrels and die were set to 190°C and screw speed was 576 rpm. Quenching was accomplished using a water bath. The polymer strand was cut into pellets using a standard rotating blade cutter. The pellets were molded into 4cm x 7.5cm x 3.2cm thick plaques using a 234cm³ capacity, 150 ton clamping pressure injection molding machine. The profile was as follows: Rear 204 °C, Center 204°C, Front 204 °C and Nozzle 204 °C, Injection 2.5 sec, Pack 4.0 sec. Hold 64 sec. Injection Pressure 8.3 MPa, Ram Speed fast, and Back Pressure 0.34 MPa. The mold temperature was 77°C. The plaques were measured for total solar reflectivity according to ASTM E424 and E903. The results are documented in Table 3

**Table 3**

| Sample | HALS (%) | Filofin® Red BR-PP (%) | Irgalite® Blue BSP (%) | DLS 210 (%) | E424 Total Solar Reflectivity (%) | Change (%) | E903 Total Solar Reflectivity (%) | Change (%) |
|---|---|---|---|---|---|---|---|---|
| 10 | 0 | 0 | 0.5 | 0 | 16.7 | - | 18.0 | - |
| 11 | 0 | 0 | 0.5 | 2 | 33 | 98 | 34.5 | 92 |
| 12 | 0.3 | 0 | 0.5 | 2 | 34.6 | 107 | 35.5 | 97 |
| 13 | 0 | 0.5 | 0 | 0 | 27.9 | - | 26.1 | - |
| 14 | 0 | 0.5 | 0 | 2 | 54.1 | 94 | 52.5 | 101 |
| 15 | 0.3 | 0.5 | 0 | 2 | 55.5 | 99 | 53.1 | 103 |

The data shows a significant improvement in the total solar reflectivity of the red and blue pigmented plaques upon incorporation of the DLS 210. The degree of improvement appears to be pigment dependent. The addition of a hindered amine light stabilizer (samples 12 and 15) does not impart significant solar reflectivity enhancement.

### Example 4:

Polypropylene homopolymer (Profax® PDC1274 obtained from Lyondell Basell) was compounded with various combinations of pigments designed to enhance solar reflectivity (0.57 wt% Blue 385 or 0.84 wt% Black 10P922 obtained from Sheppard Colors) along with TiO₂ (DuPont^{™} Light Stabilizer 220 obtained from DuPont, UV Titan P190 obtained from Kemira or Hombitec RM-130F obtained from Sachtleben) in proportions documented in Table 4. Compounding and injection molding into plaques was accomplished according to the method in Example 3. The plaques were measured for total solar reflectivity according to ASTM E424 and E903.

**Table 4.**

| Sample | TiO₂ | MPPS * (nm) | TiO₂ (%) | Color | E424 TSR** (%) | Change (%) | E903 TSR** (%) | Change (%) |
|---|---|---|---|---|---|---|---|---|
| 16 | None | | 0 | Blue | 20.6 | - | 19.0 | - |
| 17 | DLS 220 | 103 | 1 | Blue | 53.6 | 160 | 49.7 | 162 |
| 18 | RM130F | 40 | 1 | Blue | 36.0 | 75 | 33.0 | 74 |
| 19 | P190 | 36 | 1 | Blue | 32.3 | 57 | 29.6 | 56 |
| 20 | None | | 0 | Black | 18.1 | - | 19.7 | - |
| 21 | DLS 220 | 103 | 1 | Black | 25.9 | 43 | 26.9 | 37 |
| 22 | RM130F | 40 | 1 | Black | 19.3 | 7 | 20.9 | 6 |
| 23 | P190 | 36 | 1 | Black | 18.3 | 1 | 20.0 | 2 |

| | | | | | | | | |
|---|---|---|---|---|---|---|---|---|
| *MPPS = Median Primary Particle Size ** TSR = Total Solar Reflectivity | | | | | | | | |

The results in the Table 4 indicate that the level of solar reflectivity improvement is highly dependent on the mean particle size of the TiO₂. Samples 17 and 21 have 2.5X larger median primary particle size than do Samples 18, 19, 22 and 23 and as a result have significantly higher level of improvement of total solar reflectivity.

### Example 5:

Acrylonitrile - styrene -acrylate copolymer (ASA) (Luran® S 440 T0 obtained from BASF) was compounded with various levels of combinations of blue and brown (Blue 385 or Brown 10P850 obtained from Sheppard Colors) pigment along with DuPont^{™} Light Stabilizer 220 TiO₂ (obtained from DuPont) in proportions documented in table 5. The compounding was accomplished using an 18mm co-rotating twin screw extruder equipped with a 3.2mm 1-hole die and two gravimetric feeders in the rear. The barrels in zones 1 to 5 were set to a temperature of 260°C, zones 6-8 and die were set to 250°C. A vacuum port was in barrel 8 and operated under 125cm of Mercury. Quenching was accomplished using a water bath. The strand was cut into pellets using a standard rotating blade cutter.

The pellets were extruded into 20 cm wide by 50 micron thick film using a 9-barrel, 30mm co-rotating twin screw extruder equipped with a vacuum port in barrel 8, a 25cm wide flex lip die set to a nominal 50 micron gap and a volumetric feeder in the rear. The barrels temperatures were 260 °C and the die was 250 °C. The screw speed was 100 rpm and the vacuum port pulled 125cm of Mercury. Quenching was accomplished using a water heated quench roll set to 40°C. The rate was 2.4 m/min. The films were measured for total solar reflectivity according to ASTM E424 and E903. The results are documented in Table 5.

**Table 5**

| Sample | TiO₂ | TiO₂ (%) | Blue (%) | Brown (%) | E424 Total Solar Reflectivity (%) | Change (%) | E903 Total Solar Reflectivity (%) | Change (%) |
|---|---|---|---|---|---|---|---|---|
| 24 | None | 0 | 1 | 0 | 22.8 | - | 21.5 | - |
| 25 | DLS 220 | 1 | 1 | 0 | 29.2 | 28 | 27.3 | 27 |
| 26 | DLS 220 | 2 | 1 | 0 | 33.4 | 46 | 31.2 | 45 |
| 27 | RM130F | 1 | 1 | 0 | 25.0 | 10 | 23.5 | 9 |
| 28 | R-103 | 1 | 1 | 0 | 35.3 | 55 | 33.2 | 54 |
| 29 | None | 0 | 0 | 1 | 24.2 | - | 23.9 | - |
| 30 | DLS 220 | 1 | 0 | 1 | 27.5 | 14 | 26.8 | 12 |
| 31 | DLS 220 | 2 | 0 | 1 | 30.7 | 27 | 29.9 | 25 |
| 32 | RM 130F | 1 | 0 | 1 | 24.5 | 1 | 24.1 | 0.8 |
| 33 | R-103 | 1 | 0 | 1 | 32.3 | 33 | 31.6 | 32 |

The results in the Examples above show that not only is the improvement in solar reflectivity is dependent on the type of TiO₂ utilized but the type of colored pigment as well.

### Example 6:

Low density polyethylene (Petrothene® NA-206000 obtained from Equistar) was compounded pigment designed to enhance solar reflectivity (0.6 wt% Green 260 obtained from Sheppard Colors) and ultrafine TiO₂ ( DuPont^{™} Light Stabilizer 220 and 210 obtained from DuPont, UV and Titan P190 obtained from Kemira) in proportions documented in Table 6.

The samples were prepared according to the method of Example 3. Modifications were made to the temperatures. For the extruder, the barrels and die were set to 125°C and the screw speed was 600 rpm. The profile for injection molding was as follows: Rear 204 °C, Center 204°C, Front 204 °C and Nozzle 204 °C, Injection 2.5sec, Pack 4.0, Hold 64 sec, Injection Pressure 8.3 MPa, Ram Speed fast, and Back Pressure 0.34 MPa. The mold temperature was 65°C. The plaques were measured for total solar reflectivity according to ASTM E424 and E903. The results are documented in Table 6.

**Table 6**

| Sample | TiO₂ | Median Primary Particle Size (nm) | TiO₂ (%) | E424 Total Solar Reflectivity (%) | Change (%) | E903 Total Solar Reflectivity (%) | Change (%) |
|---|---|---|---|---|---|---|---|
| 34 | None | | 0 | 20.3 | | 20.3 | |
| 35 | DLS 210 | 103 | 1 | 38 | 87% | 36.4 | 79% |
| 36 | DLS 220 | 103 | 1 | 39.4 | 94% | 37.7 | 86% |
| 37 | P190 | 36 | 1 | 25.9 | 28% | 25.4 | 25% |

The results in Table 6 indicate that the level of solar reflectivity improvement is highly dependent on the mean particle size of the TiO₂.

### Example 7: PET

Polyethylene terephthalate (crystar® 5005 obtained from DuPont) was compounded with pigment designed to enhance solar reflectivity (0.6 wt% Green 260 obtained from Sheppard Colors) along with TiO₂ ( DuPont^{™} Light Stabilizer 220 and 210 obtained from DuPont, UV and Titan P190 obtained from Kemira) in proportions documented in Table 7.

Samples were prepared according to the method of Example 3. Modifications were made to the temperatures. For the extruder, zones 1 to 6 were set to 270°C and zones 7,8 and the die to 260°C. Screw speed was 650 rpm. The profile for injection molding was as follows: Rear 288 °C, Center 280°C, Front 280°C and Nozzle 280 °C, Injection 2.5sec, Pack 4.0 sec, Hold 64 sec, Injection Pressure 4.1 MPa, Hold Pressure 3.4 MPa, Ram Speed fast, and Back Pressure 0.34 MPa. The plaques were measured for total solar reflectivity according to ASTM E424 and E903. The results are documented in Table 7.

**Table 7**

| Sample | TiO₂ | Median Primary Particle Size (nm) | TiO₂ (%) | E424 Total Solar Reflectivity (%) | Change (%) | E903 Total Solar Reflectivity (%) | Change (%) |
|---|---|---|---|---|---|---|---|
| 38 | None | | 0 | 17 | - | 17.4 | - |
| 39 | DLS 210 | 103 | 1 | 31.4 | 85% | 30.3 | 74% |
| 40 | DLS 220 | 103 | 1 | 32.6 | 92% | 31.4 | 80% |
| 41 | P190 | 36 | 1 | 19.3 | 14% | 19.4 | 11% |

The results in Table 7 indicate that the level of solar reflectivity improvement is highly dependent on the mean particle size of the TiO₂.

## Claims

1. A polymer-based product for applications exposed to light having improved solar reflectivity and UV protection comprising:
(a) a polymer;
(b) a colorant; and
(c) an ultrafine TiO₂ having a median primary particle size (MPPS) of 70 to 135 nm determined by utilizing high resolution scanning electron micrographs (HRSEM).

2. The polymer-based product of claim 1 wherein the median primary particle size (MPPS) is 90 nm to 120 nm.

3. The polymer-based product of claim 1 wherein the polymer is a thermoplastic polymer or a thermosetting polymer.

4. The polymer-based product of claim 3 wherein the polymer is selected from the group of polyethylene, polypropylene, polybutylene, and mixtures thereof.

5. The polymer-based product of claim 1 wherein the colorant is a colored pigment, a dye or a dispersed dye.

6. The polymer-based product of claim 5 wherein the colorant is a colored pigment.

7. The polymer-based product of claim 5 wherein the colorant is present in the amount of 0.1 % to 20% by weight, based on the total weight of the solids.

8. The polymer-based product of claim 1 wherein the ultrafine TiO₂ is polyhedral in shape and has an aspect ratio of 1 to 3.

9. The polymer-based product of claim 8 wherein the ultrafine TiO₂ is polyhedral in shape and has an aspect ratio of 1 to 2.

10. The polymer-based product of claim 1 wherein the ultrafine TiO₂ is surface treated.

11. The polymer-based product of claim 10 wherein the surface treatment is with a metal oxide or mixtures of metal oxides.

12. The polymer-based product of claim 10 wherein the surface treatment is selected from the group consisting of silane, siloxane, organo-phosphonate, organo-phosphoric acid compound, organo-acid phosphate, organo-phosphinate, organo-sulfonic compound, hydrocarbon based surface treatment, and mixtures thereof.

13. The polymer-based product of claim 1 wherein the ultrafine TiO₂ is present in the amount of 0.1 % to 20% by weight, based on the weight of the solids.

14. The polymer-based product of claim 1 wherein the polymer is present in the amount of 40% to 99.8% by weight, based on the total weight of the solids.

15. The polymer-based product of claim 1 further comprising additives selected from the group consisting of polymer processing aid; catalyst; initiator; anti-oxidant; blowing agent, ultraviolet light stabilizer; organic pigment; plasticizer; antiblocking agent; leveling agent; viscosity modifier; chain extender; flame retardant; and anti-cratering additive.

16. The polymer-based product of claim 15 wherein the polymer processing aid is a fluoropolymer or fluoroelastomer.

17. The polymer-based product of claim 15 wherein the polymer additive is present in the amount of 0% to 20% by weight, based on the total weight of the solids.

18. The polymer-based product of claim 1 wherein the polymer-based product is a shaped article.

19. The polymer-based product of claim 18 wherein the shaped article is selected from the group consisting of tubing, pipes, wire coatings, films such as roofing materials, agricultural films, shrink wrap protective films, siding, window profiles, stadium seating, decking, railing, building materials, awnings, tents, geothermal membranes, and toys.

20. A roof cover comprising a polymer-based product according to claim 1.

## Patentansprüche

1. Produkt auf Polymerbasis für Anwendungen, die Licht ausgesetzt sind, das ein verbessertes Sonnenreflektionsvermögen und verbesserten UV-Schutz aufweist, umfassend:
(a) ein Polymer;
(b) ein Farbmittel; und
(c) ein ultrafeines TiO₂, das eine mittlere primäre Teilchengröße (MPPS) von 70 bis 135 nm, durch Anwendung von Hochauflösungsabtast-Elektronenmikrographen (HRSEM) bestimmt, aufweist.

2. Produkt auf Polymerbasis nach Anspruch 1, wobei die mittlere primäre Teilchengröße (MPPS) 90 nm bis 120 nm beträgt.

3. Produkt auf Polymerbasis nach Anspruch 1, wobei das Polymer ein thermoplastisches Polymer oder ein Duroplastpolymer ist.

4. Produkt auf Polymerbasis nach Anspruch 3, wobei das Polymer aus der Gruppe von Polyethylen, Polypropylen, Polybutylen und Mischungen davon ausgewählt ist.

5. Produkt auf Polymerbasis nach Anspruch 1, wobei das Farbmittel ein farbiges Pigment, ein Farbstoff oder ein dispergierter Farbstoff ist.

6. Produkt auf Polymerbasis nach Anspruch 5, wobei das Farbmittel ein farbiges Pigment ist.

7. Produkt auf Polymerbasis nach Anspruch 5, wobei das Farbmittel in der Menge von 0,1 bis 20 Gew.-%, auf das Gesamtgewicht der Feststoffe bezogen, vorliegt.

8. Produkt auf Polymerbasis nach Anspruch 1, wobei das ultrafeine TiO₂ eine polyedrische Gestalt und ein Seitenverhältnis von 1 zu 3 aufweist.

9. Produkt auf Polymerbasis nach Anspruch 8, wobei das ultrafeine TiO₂ eine polyedrische Gestalt und ein Seitenverhältnis von 1 zu 2 aufweist.

10. Produkt auf Polymerbasis nach Anspruch 1, wobei das ultrafeine TiO₂ oberflächenbehandelt ist.

11. Produkt auf Polymerbasis nach Anspruch 10, wobei die Oberflächenbehandlung mit einem Metalloxid oder Mischungen von Metalloxiden erfolgt.

12. Produkt auf Polymerbasis nach Anspruch 10, wobei die Oberflächenbehandlung aus der Gruppe ausgewählt ist bestehend aus Silan, Siloxan, Organophosphonat, Organophosphorsäureverbindung, Organosäurephosphat, Organophosphinat, Organosulfonsäureverbindung, Oberflächenbehandlung auf Kohlenwasserstoffbasis, und Mischungen davon.

13. Produkt auf Polymerbasis nach Anspruch 1, wobei das ultrafeine TiO₂ in der Menge von 0,1 bis 20 Gew.-%, auf das Gewicht der Feststoffe bezogen, vorliegt.

14. Produkt auf Polymerbasis nach Anspruch 1, wobei das Polymer in der Menge von 40 bis 99,8 Gew.-%, auf das Gesamtgewicht der Feststoffe bezogen, vorliegt.

15. Produkt auf Polymerbasis nach Anspruch 1, des Weiteren Zusatzmittel umfassend ausgewählt aus der Gruppe bestehend aus Polymerverarbeitungshilfsmittel; Katalysator; Initiator; Antioxidationsmittel; Treibmittel, Ultraviolettlichtstabilisator; organischem Pigment; Weichmacher; Antiblockiermittel; Egalisiermittel, Viskositätsmodifiziennittel; Kettenverlängerungsmittel; Flammenverzögerungsmittel und Kraterbildung verhinderndem Zusatzmittel.

16. Produkt auf Polymerbasis nach Anspruch 15, wobei das Polymerverarbeitungshilfsmittel ein Fluorpolymer oder Fluorelastomer ist.

17. Produkt auf Polymerbasis nach Anspruch 15, wobei das Polymerzusatzmittel in der Menge von 0 bis 20 Gew.-%, auf das Gesamtgewicht der Feststoffe bezogen, vorliegt.

18. Produkt auf Polymerbasis nach Anspruch 1, wobei das Produkt auf Polymerbasis ein gestalteter Artikel ist.

19. Produkt auf Polymerbasis nach Anspruch 18, wobei der gestaltete Artikel aus der Gruppe ausgewählt ist bestehend aus Schlauchmaterial, Rohrleitungen, Drahtbeschichtungen, Folien wie beispielsweise Bedachungsmaterialien, Agrarfolien, Schutzschrumpffolien, Hausverkleidung, Fensterprofilen, Stadionsitzen, Terrassendielen, Geländer, Baumaterialien, Markisen, Zelten, geothermischen Membranen und Spielzeug.

20. Dachbedeckung umfassend ein Produkt auf Polymerbasis nach Anspruch 1.

## Revendications

1. Produit à base de polymère pour les applications exposées à la lumière ayant un pouvoir réfléchissant de la lumière solaire et une protection contre les UV améliorés comprenant:
(a) un polymère;
(b) un colorant; et
(c) un TiO₂ ultrafin ayant une taille moyenne des particules primaires (MPPS) de 70 à 135 nm déterminée en utilisant des micrographies électroniques par balayage à haute résolution (HRSEM).

2. Produit à base de polymère selon la revendication 1, dans lequel la taille moyenne des particules primaires (MPPS) est de 90 nm à 120 nm.

3. Produit à base de polymère selon la revendication 1, dans lequel le polymère est un polymère thermoplastique ou un polymère thermodurcissable.

4. Produit à base de polymère selon la revendication 3, dans lequel le polymère est sélectionné parmi le groupe du polyéthylène, du polypropylène, du polybutylène, et de leurs mélanges.

5. Produit à base de polymère selon la revendication 1, dans lequel le colorant est un pigment coloré, une teinture ou un colorant plastosoluble.

6. Produit à base de polymère selon la revendication 5, dans lequel le colorant est un pigment coloré.

7. Produit à base de polymère selon la revendication 5, dans lequel le colorant est présent en la quantité de 0,1 % à 20 % en poids, basée sur le poids total des matières solides.

8. Produit à base de polymère selon la revendication 1, dans lequel le TiO₂ ultrafin a la forme d'un polyèdre et a un rapport longueur sur largeur de 1 à 3.

9. Produit à base de polymère selon la revendication 8, dans lequel le TiO₂ ultrafin a la forme d'un polyèdre et a un rapport longueur sur largeur de 1 à 2.

10. Produit à base de polymère selon la revendication 1, dans lequel le TiO₂ ultrafin est traité en surface.

11. Produit à base de polymère selon la revendication 10, dans lequel le traitement de surface est effectué avec un oxyde métallique ou des mélanges d'oxydes métalliques.

12. Produit à base de polymère selon la revendication 10, dans lequel le traitement de surface est sélectionné parmi le groupe constitué du silane, du siloxane, d'un organo-phosphonate, d'un composé d'acide organophosphorique, d'un phosphate d'acide organique, d'un phosphinate organique, d'un composé organosulfonique, d'un traitement de surface à base d'hydrocarbure, et de leurs mélanges.

13. Produit à base de polymère selon la revendication 1, dans lequel le TiO₂ ultrafin est présent en la quantité de 0,1 % à 20 % en poids, basée sur le poids des matières solides.

14. Produit à base de polymère selon la revendication 1, dans lequel le polymère est présent en la quantité de 40 % à 99,8 % en poids, basée sur le poids total des matières solides.

15. Produit à base de polymère selon la revendication 1, comprenant en outre des additifs sélectionnés parmi le groupe constitué de l'auxiliaire de transformation de polymère; du catalyseur; de l'initiateur; de l'antioxydant; de l'agent de soufflage, de l'agent de stabilisation de la lumière ultraviolette; du pigment organique; du plastifiant; de l'agent antiadhésif; de l'agent d'uniformisation; de l'agent de modification de la viscosité; de l'extenseur de chaîne; de l'agent ignifuge; et de l'additif anti-formation de cratères.

16. Produit à base de polymère selon la revendication 15, dans lequel l'auxiliaire de transformation de polymère est un polymère fluoré ou un élastomère fluoré.

17. Produit à base de polymère selon la revendication 15, dans lequel l'additif polymère est présent en la quantité de 0 % à 20 % en poids, basée sur le poids total des matières solides.

18. Produit à base de polymère selon la revendication 1, dans lequel le produit à base de polymère est un article profilé.

19. Produit à base de polymère selon la revendication 18, dans lequel l'article profilé est sélectionné parmi le groupe constitué des tubulures, des conduites, des enrobages de câble, des films tels que les matériaux pour les toitures, des films agricoles, des films de protection à enveloppe rétrécissante, des bardages, des profilés de fenêtre, des sièges de stade, des panneaux de toit, des garde-corps, des matériaux de construction, des auvents, des tentes, des membranes géothermiques, et des jouets.

20. Revêtement de toiture comprenant un produit à base de polymère selon la revendication 1.
